(19) **Europäisches Patentamt**
**European Patent Office**
**Office européen des brevets**

(11) **EP 4 661 570 A1**

(12) **EUROPEAN PATENT APPLICATION**
published in accordance with Art. 153(4) EPC

(43) Date of publication:
**10.12.2025 Bulletin 2025/50**

(51) International Patent Classification (IPC):
*H04W 72/40* (2023.01)

(21) Application number: **24759620.8**

(52) Cooperative Patent Classification (CPC):
**H04W 56/00; H04W 72/0446; H04W 72/25;
H04W 72/40**

(22) Date of filing: **18.02.2024**

(86) International application number:
**PCT/CN2024/077417**

(87) International publication number:
**WO 2024/174943 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.02.2023 CN 202310171637
03.04.2023 CN 202310386077**

(71) Applicant: **Huawei Technologies Co., Ltd.
Shenzhen, Guangdong 518129 (CN)**

(72) Inventors:
• **WEI, Xiuhong**
  **Shenzhen, Guangdong 518129 (CN)**
• **LI, Xueru**
  **Shenzhen, Guangdong 518129 (CN)**
• **BI, Shuangkaisheng**
  **Shenzhen, Guangdong 518129 (CN)**

(74) Representative: **Maiwald GmbH
Engineering
Elisenhof
Elisenstrasse 3
80335 München (DE)**

(54) **RESOURCE POOL DETERMINATION METHOD, AND APPARATUS**

(57) This application relates to a resource pool determining method and an apparatus. A first terminal device receives a first sidelink synchronization signal in a first time domain unit, where the first sidelink synchronization signal includes a first sequence, and the first sequence indicates an index of the first sidelink synchronization signal. The first terminal device determines a time domain position of a first resource pool based on the index of the first sidelink synchronization signal. The index of the first sidelink synchronization signal is determined based on the first sequence included in the first sidelink synchronization signal, and both a terminal device of a sensing type and a terminal device of a communication type can identify the first sequence. In this way, terminal devices may not need to implement synchronization based on a PSBCH, but can determine time domain positions of respective resource pools based on sequences included in received sidelink synchronization signals. A different type of terminal device does not mistakenly use a resource in a resource pool configured for another type of terminal device. This reduces a probability of a resource conflict.

First UE → S201: First SL synchronization signal (including a first sequence indicating an index of the first SL synchronization signal)

S202: Determine a time domain position of a first resource pool based on the index of the first SL synchronization signal

Second UE

FIG. 2

**Description**

CROSS-REFERENCE TO RELATED APPLICATIONS

This application claims priority to Chinese Patent Application No. 202310171637.6, filed with the China National Intellectual Property Administration on February 20, 2023 and entitled "RESOURCE POOL DETERMINING METHOD AND DEVICE", which is incorporated herein by reference in its entirety. This application claims priority to Chinese Patent Application No. 202310386077.6, filed with the China National Intellectual Property Administration on April 3, 2023 and entitled "RESOURCE POOL DETERMINING METHOD AND APPARATUS", which is incorporated herein by reference in its entirety.

TECHNICAL FIELD

This application relates to the field of communication technologies, and in particular, to a resource pool determining method and an apparatus.

BACKGROUND

To support integrated sensing and communication, a user equipment (user equipment, UE) may perform sensing by using a time-frequency resource in a sidelink (sidelink, SL). For example, the UE may send a sensing reference signal by using the time-frequency resource in the SL; and may sense information such as a distance to a target and a speed of the target by receiving an echo of the sensing reference signal and comparing the echo with the sent sensing reference signal. In the following, a UE configured to implement a sensing function is referred to as a sensing UE, and a UE configured to implement a communication function is referred to as a communication UE.

To support SL sensing and SL communication, currently, resource pools may be respectively configured for the sensing UE and the communication UE. For both the sensing UE and the communication UE, locations of the resource pools need to be determined to correctly use the corresponding resource pools. In this case, synchronization between the communication UE and the sensing UE is an important prerequisite for the two types of UEs to correctly determine the respective resource pools.

Currently, the synchronization between the UEs is implemented by using a sidelink synchronization signal block (sidelink synchronization signal block, S-SSB). The S-SSB includes a sidelink primary synchronization signal (sidelink primary synchronization signal, S-PSS), a sidelink secondary synchronization signal (sidelink secondary synchronization signal, S-SSS), and a physical sidelink shared channel (physical sidelink broadcast channel, PSBCH). The PSBCH may be generated through a process like channel coding. However, in many sensing scenarios (for example, a home sensing scenario or an industrial application scenario), to limit costs, usually, only a simple radar sensing module is configured for the sensing UE, and functional modules such as a channel encoding and decoding module and a modulation and demodulation module are not configured for the sensing UE. In this case, the sensing UE cannot send an S-SSB or identify an S-SSB from the communication UE, and therefore cannot implement synchronization with the communication UE. Consequently, the locations that are of the resource pools and that are determined by the sensing UE and the communication UE are different.

SUMMARY

Embodiments of this application provide a resource pool determining method and an apparatus, so that a location that is of a resource pool and that is determined by a sensing UE is consistent with a location that is of a resource pool and that is determined by a communication UE.

According to a first aspect, a first resource pool determining method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a first terminal device. The method includes: receiving a first sidelink synchronization signal in a first time domain unit, where the first sidelink synchronization signal includes a first sequence, and the first sequence indicates an index of the first sidelink synchronization signal; and determining a time domain position of a first resource pool based on the index of the first sidelink synchronization signal.

In this embodiment of this application, after receiving the first sidelink synchronization signal, the first terminal device can determine the time domain position of the first resource pool based on the index of the first sidelink synchronization signal. The index of the first sidelink synchronization signal is determined based on the first sequence included in the first sidelink synchronization signal, and both a terminal device of a sensing type and a terminal device of a communication type can identify the first sequence. In this way, terminal devices may not need to implement synchronization based on a PSBCH, but can determine time domain positions of respective resource pools based on sequences included in received sidelink synchronization signals. A different type of terminal device does not mistakenly use a resource in a resource pool configured for another type of terminal device. This reduces a probability of a resource conflict.

In an optional implementation, the first resource pool is used by the first terminal device to send and receive signals. For example, if the first terminal device is a sensing terminal device, the first terminal device may send a sensing reference signal by using a resource in the first resource pool, and/or receive an echo of the sensing reference signal. For another example, if the first terminal device is a communication terminal device, the first terminal device may send a communication signal and/or receive a communication signal by using a resource in the first resource pool.

In an optional implementation, the index of the first sidelink synchronization signal is determined by sorting all sidelink synchronization signals that are of a same type as the first sidelink synchronization signal and that are in a mapping period. Indexes are respectively set for different types of sidelink synchronization signals in a mapping period, to help reduce index values. In this way, overheads of the first sequence are reduced.

In an optional implementation, the first sequence is an S-SSS sequence and/or an S-PSS sequence; or the first sidelink synchronization signal includes the first sequence, an S-PSS sequence, and an S-SSS sequence. An existing S-SSS sequence and/or an existing S-PSS sequence in the first sidelink synchronization signal may be used as the first sequence, and the first sequence does not need to be added to the first sidelink synchronization signal. This helps reduce overheads of the first sidelink synchronization signal, and an original structure of the sidelink synchronization signal can be maintained. Alternatively, the first sequence may be added to the first sidelink synchronization signal, so that an indication is clearer and other information in the first sidelink synchronization signal is not affected.

In an optional implementation, that the first sequence is the S-SSS sequence and/or the S-PSS sequence includes: the first sequence is an S-SSS sequence having a first cyclic shift and/or an S-PSS sequence having a second cyclic shift. For example, for an S-SSS and/or an S-PSS corresponding to a same SLSS ID, different cyclic shifts may correspond to different indexes, so that SLSSs can be saved.

In an optional implementation, determining the time domain position of the first resource pool based on the index of the first sidelink synchronization signal includes: determining a first parameter based on the index of the first sidelink synchronization signal, where the first parameter includes a time domain distance between a second sidelink synchronization signal in a mapping period and the first resource pool, and duration of the first resource pool, and a type of the second sidelink synchronization signal matches a type of the first terminal device; and determining the time domain position of the first resource pool based on the first parameter. A start time domain position or an end time domain position of the first resource pool may be determined based on the time domain distance between the second sidelink synchronization signal and the first resource pool. Then, with reference to the duration of the first resource pool, the start time domain position and the end time domain position of the first resource pool can be determined, that is, the time domain position of the first resource pool is determined.

In an optional implementation, if the first terminal device is a sensing device, and the first sidelink synchronization signal is a sidelink synchronization signal from another sensing device, the second sidelink synchronization signal is the first sidelink synchronization signal. If the first terminal device is a sensing terminal device, the first resource pool is a sensing resource pool, and the first sidelink synchronization signal is also a sidelink synchronization signal of a sensing type, the second sidelink synchronization signal is the first sidelink synchronization signal. The first terminal device can determine the time domain position of the first resource pool based on the first sidelink synchronization signal and the first parameter.

In an optional implementation, if the first terminal device is a sensing device, and the first sidelink synchronization signal is a sidelink synchronization signal from a communication device, the second sidelink synchronization signal is determined based on the first sidelink synchronization signal. If the first terminal device is a sensing terminal device, and the first resource pool is a sensing resource pool, but the first sidelink synchronization signal is a sidelink synchronization signal of a communication type, the first terminal device may determine the second sidelink synchronization signal based on the first sidelink synchronization signal, where the second sidelink synchronization signal is, for example, a sidelink synchronization signal of a sensing type. Therefore, the first terminal device can determine the time domain position of the first resource pool based on the second sidelink synchronization signal and the first parameter.

In an optional implementation, determining the time domain position of the first resource pool based on the index of the first sidelink synchronization signal includes: determining, based on the index of the first sidelink synchronization signal, a physical index of a time domain unit in which the first sidelink synchronization signal is located; determining, based on the physical index of the time domain unit in which the first sidelink synchronization signal is located, time domain positions of all time domain units in a mapping period in which the first sidelink synchronization signal exists; and determining the time domain position of the first resource pool in the mapping period based on the time domain positions of all the time domain units. In this manner, the physical index of the time domain unit in which the first sidelink synchronization signal is located can be determined based on the index of the first sidelink synchronization signal, so that the time domain position of the first resource pool can be further determined. In this manner, no additional parameter (for example, the first parameter) needs to be set, and an implementation is simple.

In an optional implementation, determining the time domain position of the first resource pool in the mapping period based on the time domain positions of all the time domain units includes: determining the time domain position of the first resource pool in the mapping period based on the time domain positions of all the time domain units and a bitmap, where the bitmap indicates a time domain unit that is in a logic time domain unit set and that belongs to the first resource pool, and the logic time domain unit set is determined based on the time domain positions of all the time domain units.

In an optional implementation, the first sidelink synchronization signal further includes a second sequence, and the second sequence indicates a type of the first sidelink synchronization signal. The first sidelink synchronization signal may indicate the type of the first sidelink synchronization signal, so that the first terminal device can determine the type of the first sidelink synchronization signal. A sequence indicates a type, so that both a sensing terminal device and a communication terminal device can determine types of received sidelink synchronization signals.

In an optional implementation, the second sequence is a sidelink synchronization signal SLSS sequence; or the first sidelink synchronization signal includes an SLSS sequence and the second sequence. An existing SLSS sequence in the first sidelink synchronization signal may be used as the second sequence, and the second sequence does not need to be added to the first sidelink synchronization signal. This helps reduce the overheads of the first sidelink synchronization signal, and the original structure of the sidelink synchronization signal can be maintained. Alternatively, the second sequence may be added to the first sidelink synchronization signal, so that an indication is clear and other information in the first sidelink synchronization signal is not affected.

In an optional implementation, duration of the mapping period is less than or equal to duration of a DFN period.

In an optional implementation, the first resource pool includes a sensing resource pool or a communication resource pool; and the first terminal device includes a sensing device or a communication device.

In an optional implementation, the type of the first sidelink synchronization signal includes a sensing type or a communication type.

According to a second aspect, a second resource pool determining method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a second terminal device. The method includes: sending a first sidelink synchronization signal in a first time domain unit, where the first sidelink synchronization signal includes a first sequence, the first sequence indicates an index of the first sidelink synchronization signal, and the index of the first sidelink synchronization signal is used to determine a time domain position of a first resource pool.

In an optional implementation, the index of the first sidelink synchronization signal is determined by sorting all sidelink synchronization signals that are of a same type as the first sidelink synchronization signal and that are in a mapping period.

In an optional implementation, the first sequence is an S-SSS sequence and/or an S-PSS sequence; or the first sidelink synchronization signal includes the first sequence, an S-PSS sequence, and an S-SSS sequence.

In an optional implementation, that the first sequence is the S-SSS sequence and/or the S-PSS sequence includes: the first sequence is an S-SSS sequence having a first cyclic shift and/or an S-PSS sequence having a second cyclic shift.

In an optional implementation, the first sidelink synchronization signal further includes a second sequence, and the second sequence indicates a type of the first sidelink synchronization signal.

In an optional implementation, the second sequence is an SLSS sequence; or the first sidelink synchronization signal includes an SLSS sequence and the second sequence.

In an optional implementation, duration of the mapping period is less than or equal to duration of a DFN period.

In an optional implementation, the first resource pool includes a sensing resource pool or a communication resource pool; and the second terminal device includes a sensing device or a communication device.

In an optional implementation, the type of the first sidelink synchronization signal includes a sensing type or a communication type.

For technical effects brought by some optional implementations of the second aspect, refer to the descriptions of technical effects of corresponding implementations of the first aspect. Details are not described again.

According to a third aspect, a communication apparatus is provided. The communication apparatus may be the first terminal device according to the first aspect. The communication apparatus has functions of the first terminal device. The communication apparatus is, for example, the first terminal device, a large device including the first terminal device, or a functional module, for example, a baseband apparatus or a chip system, in the first terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive at least one piece of clock synchronization information, where the at least one piece of clock synchronization information includes first clock synchronization information, and the first clock synchronization information is received from a second terminal device over a sidelink. The processing unit is configured to select a clock synchronization reference source based on the at least one piece of clock synchronization information.

In an optional implementation, the transceiver unit (or the receiving unit) is configured to receive a first sidelink synchronization signal in a first time domain unit, where the first sidelink synchronization signal includes a first sequence, and the first sequence indicates an index of the first sidelink synchronization signal. The processing unit is configured to determine a time domain position of a first resource pool based on the index of the first sidelink synchronization signal.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the functions of the first terminal device according to the first aspect.

According to a fourth aspect, a communication apparatus is provided. The communication apparatus may be the second terminal device according to the second aspect. The communication apparatus has functions of the second terminal device. The communication apparatus is, for example, the second terminal device, a large device including the second terminal device, or a functional module, for example, a baseband apparatus or a chip system, in the second terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions in the third aspect.

In an optional implementation, the transceiver unit (or a sending unit) is configured to send a first sidelink synchronization signal in a first time domain unit, where the first sidelink synchronization signal includes a first sequence, the first sequence indicates an index of the first sidelink synchronization signal, and the index of the first sidelink synchronization signal is used to determine a time domain position of a first resource pool.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the functions of the second terminal device according to the second aspect.

According to a fifth aspect, a communication apparatus is provided. The communication apparatus may be a first terminal device, or may be a chip or a chip system used in the first terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first terminal device in the foregoing aspects.

According to a sixth aspect, a communication apparatus is provided. The communication apparatus may be a second terminal device, or may be a chip or a chip system used in the second terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the second terminal device in the foregoing aspects.

According to a seventh aspect, a communication system is provided, including a first terminal device and a second terminal device, where the first terminal device is configured to perform the method performed by the first terminal device according to the first aspect, and the second terminal device is configured to perform the method performed by the second terminal device according to the second aspect. For example, the first terminal device may be implemented by using the communication apparatus according to the third aspect or the fifth aspect, and the second terminal device may be implemented by using the communication apparatus according to the fourth aspect or the sixth aspect.

According to an eighth aspect, a computer-readable storage medium is provided. The computer-readable storage medium is configured to store a computer program or instructions. When the computer program or the instructions are run, the method performed by the first terminal device or the second terminal device in the foregoing aspects is implemented.

According to a ninth aspect, a computer program product including instructions is provided. When the computer program product runs on a computer, the methods according to the foregoing aspects are implemented.

According to a tenth aspect, a chip system is provided, including a processor and an interface. The processor is configured to: invoke instructions from the interface, and run the instructions, to enable the chip system to implement the methods according to the foregoing aspects.

BRIEF DESCRIPTION OF DRAWINGS

FIG. 1 is a diagram of a communication network to which an embodiment of this application is applicable;
FIG. 2 is a flowchart of a resource pool determining method according to an embodiment of this application;
FIG. 3 is a diagram of a set of SL synchronization resources in a mapping period according to an embodiment of this application;
FIG. 4 is a diagram of an index of an SL synchronization signal according to an embodiment of this application;
FIG. 5A is a diagram of time domain positions of different types of SL synchronization resources according to an embodiment of this application;
FIG. 5B is a diagram of determining a time domain position of a first resource pool based on a fourth parameter according to an embodiment of this application;
FIG. 5C is a diagram of a correspondence between an index of an SL synchronization signal and a physical index of a time domain unit in which the SL synchronization signal is located according to an embodiment of this application;
FIG. 6 is a diagram of an apparatus according to an embodiment of this application; and
FIG. 7 is a diagram of another apparatus according to an embodiment of this application.

DESCRIPTION OF EMBODIMENTS

To make objectives, technical solutions, and advantages of embodiments of this application clearer, the following further describes embodiments of this application in detail with reference to accompanying drawings.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one item (piece) of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, an order, a time order, priorities, importance, or the like of the plurality of objects. For example, a first SL synchronization signal and a second SL synchronization signal may be a same SL synchronization signal, or may be different SL synchronization signals. In addition, this name does not indicate that occupied resources, a sending order, transmit ends/receive ends, content, sizes, application scenarios, priorities, or importance degrees of the two SL synchronization signals are different. In addition, step numbers in embodiments described in this application are merely intended to distinguish between different steps, but are not intended to limit an order of the steps. For example, S201 may be performed before S202, or may be performed after S202, or may be simultaneously performed with S202.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, including but not limited to the following scenarios: a sensing scenario, cellular communication, device-to-device (device-to-device, D2D) communication, vehicle to everything (vehicle to everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, smart office, a smart wearable, smart transportation, a smart city (smart city), an uncrewed aerial vehicle, and a robot. The terminal device may sometimes be referred to as a UE, a terminal, an access station, a UE station, a remote station, a wireless communication device, a user apparatus, or the like.

In embodiments of this application, a sensing device may be configured to implement a sensing function, where the sensing device may include a network device (which may be referred to as a sensing network device), a terminal device (which may be referred to as a sensing terminal device), or the like. In this specification, the sensing terminal device is mainly used as an example for description. The "sensing terminal device" in the following may alternatively be replaced with the "sensing network device." For example, a sensing terminal device is a radar. The sensing terminal device may not have a communication module. In this case, the sensing terminal device does not have a communication function. For example, the sensing terminal device does not have a module of functions such as channel encoding and decoding, modulation and demodulation, or the like. Alternatively, the sensing terminal device may have a simple communication module, but the sensing terminal device only has a weak communication function, and cannot implement a complex communication function, for example, cannot parse a PSBCH.

In embodiments of this application, a communication apparatus configured to implement a function of the terminal device may be a terminal device, or may be an apparatus, for example, a chip system, that can support the terminal device in implementing the function. The apparatus may be installed in the terminal device. In the technical solutions provided in embodiments of this application, the technical solutions provided in embodiments of this application are described by using an example in which the apparatus configured to implement the function of the terminal device is the terminal device. In addition, for ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB, a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a V2X technology may be a road side unit (road side unit, RSU). The following provides descriptions by using an example in which the access network device is a base station. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

To support direct communication between UEs, an SL communication manner is introduced into an existing communication system like an LTE system or an NR system. The UEs may communicate with each other over an SL through a PC5 interface. In addition, to support integrated sensing and communication, a UE may alternatively perform sensing by using a time-frequency resource in the SL. For example, the UE may send a sensing reference signal by using the time-frequency resource in the SL; and may sense information such as a distance to a target and a speed relative to the target by receiving an echo of the sensing reference signal and comparing the echo with the sensing reference signal. In the following, a UE dedicated to implement a sensing function is referred to as a sensing UE, and a UE configured to implement a communication function is referred to as a communication UE. To support SL sensing, a corresponding SL resource needs to be first allocated to perform transmission of an SL sensing reference signal. Currently, there are two possible resource pool configuration manners. In a first configuration manner, dedicated resource pools are respectively divided for the communication UE and the sensing UE. In a second configuration manner, the communication UE and the sensing UE share a resource pool. The resource pool includes a set of time-frequency resources used for transmission of a sensing signal and/or a communication signal, and a minimum time domain granularity included in the resource pool is one slot (slot). In the first configuration manner, a resource pool used for communication and a resource pool used for sensing may be separated in time domain in a time division manner, and the communication UE and the sensing UE are allowed to select or reserve resources in respective resource pools by using different mechanisms. In the second configuration manner, the communication UE or the sensing UE may reuse resources such as a channel and a symbol (symbol) in a same slot in a time division manner or a frequency division manner.

Regardless of a manner that is of configuring the resource pool and that is used, to ensure that different UEs have same perception of a location of the resource pool, enabling the communication UE and the sensing UE to be synchronized is an important prerequisite for the two types of UEs to determine respective resource pools. Even in the first configuration manner, although the communication UE or the sensing UE may use different resource selection or reservation mechanisms, the communication UE and the sensing UE first need to determine time domain positions in which the respective resource pools are located.

In an existing protocol, synchronization between UEs is implemented by using an S-SSB. The S-SSB includes an S-PSS, an S-SSS, and a PSBCH. The S-PSS is an m sequence of a length of 127, and the S-SSS is a gold sequence of a length of 127. There are two candidate sequences of the S-PSS, that is, $N_{ID,2}^{SL} = \{0,1\}$, where $N_{ID,2}^{SL}$ indicates an index of a candidate sequence of the S-PSS. There are 336 candidate sequences of the S-SSS, that is, $N_{ID,1}^{SL} = \{0, 1, \dots, 335\}$, where $N_{ID,1}^{SL}$ indicates an index of a candidate sequence of the S-SSS. The S-PSS and the S-SSS are collectively referred to as a sidelink synchronization signal (sidelink synchronization signal, SLSS). The SLSS is identified by an SLSS identity (identity, ID). One SLSS corresponds to one SLSS ID. The SLSS may carry the SLSS ID of the SLSS. SLSS IDs may be used to distinguish between synchronization sources that send S-SSBs. In the existing protocol, 672 SLSS IDs are supported, that is, $N_{ID}^{SL} = N_{ID,1}^{SL} + 336 N_{ID,2}^{SL}$, where $N_{ID}^{SL}$ indicates an SLSS ID. A UE may implement time-frequency synchronization (or symbol synchronization) with a synchronization source by detecting an S-PSS or an S-SSS from the synchronization source. Then, the UE may implement frame synchronization with the synchronization source by parsing a direct frame number (direct frame number, DFN) and an intra-frame slot index (slot index) that are carried in a PSBCH from the synchronization source. In this way, the UE is synchronized with the synchronization source. The SLSS may also be referred to as an SLSS sequence, the S-PSS may also be referred to as an S-PSS sequence, and the S-SSS may also be referred to as an S-SSS sequence.

However, according to an existing SL communication protocol, in an S-SSB sent by the communication UE, a PSBCH uses a polar (polar) code channel coding manner and a quadrature phase shift keying (quadrature phase shift keying, QPSK) modulation manner. However, in many sensing scenarios (for example, a home sensing scenario or an industrial application scenario), to limit costs, usually, only a simple radar sensing module is configured for the sensing UE, and modules such as a channel encoding and decoding module and a modulation and demodulation module are not configured for the sensing UE. Therefore, the sensing UE can only detect an S-PSS/S-SSS from the communication UE and implement time-frequency synchronization with the communication UE, but cannot parse a PSBCH from the communication UE. As a result, the sensing UE cannot implement frame synchronization with the communication UE, that is, the sensing UE cannot be synchronized with the communication UE. Consequently, the sensing UE and the communication UE may have inconsistent perception of a location of a resource pool. For example, the sensing UE may mistakenly use an SL resource in a resource pool of the communication UE. This results in a resource conflict.

In view of this, in embodiments of this application, after receiving a first SL synchronization signal, a first UE can determine a time domain position of a first resource pool based on an index (index) of the first SL synchronization signal. The index of the first SL synchronization signal is determined based on a first sequence included in the first SL synchronization signal, and both a UE of a sensing type and a UE of a communication type can identify the first sequence. In this way, the UEs may not need to implement synchronization based on a PSBCH, but can determine time domain positions of respective resource pools based on sequences included in received SL synchronization signals. A different type of UE does not mistakenly use a resource in a resource pool configured for another type of UE. This reduces a probability of a resource conflict.

The technical solutions provided in embodiments of this application may be applied to a 4th generation (4th generation, 4G) mobile communication technology system like a long term evolution (long term evolution, LTE) system, may be applied to a 5G system like a new radio (new radio, NR) system, or may be applied to a next generation mobile communication system or another similar communication system like a 6th generation (6th generation, 6G) mobile communication technology system. This is not specifically limited. In addition, the technical solutions provided in embodiments of this application may be applied to a device-to-device D2D scenario, for example, an NR-D2D scenario, or may be applied to a V2X scenario, for example, an NR-V2X scenario. For example, the technical solutions provided in embodiments of this application may be used in fields such as intelligent driving, assisted driving, or an intelligent connected vehicle.

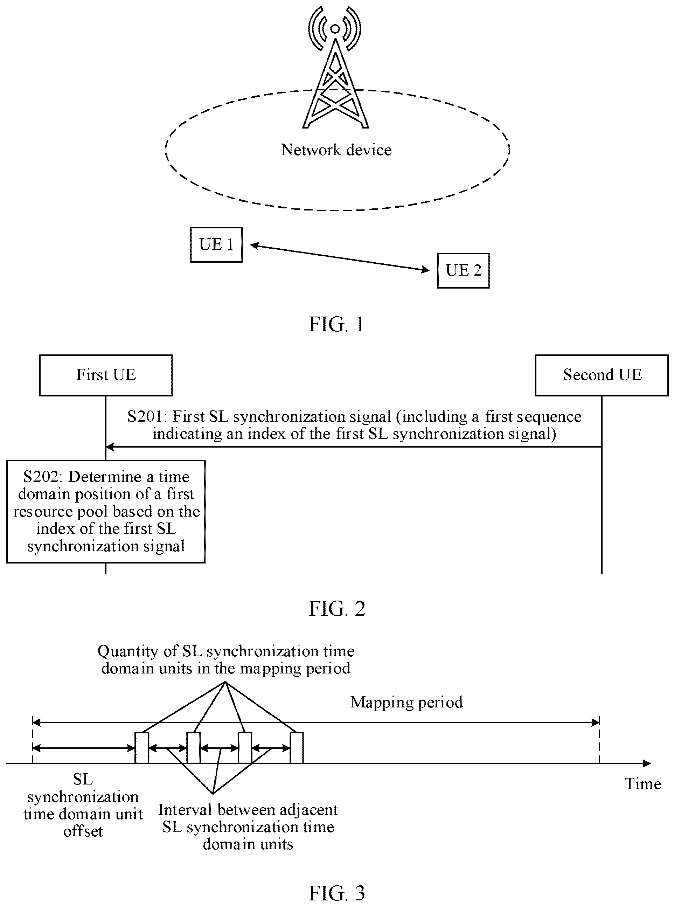

FIG. 1 shows a communication network architecture to which an embodiment of this application is applicable. FIG. 1 includes a UE 1, a UE 2, and a network device. The UE 1 is, for example, a sensing UE, and the UE 2 is a communication UE. The network device includes, for example, an access network device, and/or a core network device. The network device may configure resource pools for the UE 1 and the UE 2 respectively, for example, configure dedicated resource pools for the UE 1 and the UE 2 respectively. Alternatively, the network device may configure a same resource pool for the UE 1 and the UE 2, and the UE 1 and the UE 2 may share resources in the resource pool in a time division manner, a frequency division manner, or the like. Alternatively, a resource pool used by the UE 1 and/or the UE 2 may not be configured by the network device, for example, may be predefined in a protocol, may be preconfigured in a UE, or may be configured by a higher layer of the UE. In FIG. 1, an example in which both the UE 1 and the UE 2 are located outside coverage of the network device is used. In actual application, the UE 1 and/or the UE 2 may alternatively be located in coverage of a network device. If both the UE 1 and the UE 2 are in the coverage of the network device, the UE 1 and the UE 2 may be in coverage of a same network device, or may be in coverage of different network devices.

To better describe embodiments of this application, the following describes, with reference to the accompanying drawings, methods provided in embodiments of this application. In embodiments of this application, one time domain unit includes, for example, one or more subframes (subframes), one or more slots (slots), one or more mini-slots (mini-slots), or one or more orthogonal frequency division multiplexing (orthogonal frequency division multiplexing, OFDM) symbols (symbols).

Unless otherwise specified below, in the accompanying drawings corresponding to embodiments of this application, steps indicated by dashed lines are all optional steps. The methods provided in embodiments of this application may all be applied to the network architecture shown in FIG. 1. For example, the first UE in embodiments of this application may be the UE 1 or the UE 2 in FIG. 1, and the second UE in embodiments of this application may be a UE other than the first UE in FIG. 1, or may be a UE not included in FIG. 1.

An embodiment of this application provides a resource pool determining method. FIG. 2 is a flowchart of the method.

S201: A second UE sends a first SL synchronization signal. Correspondingly, a first UE receives the first SL synchronization signal. For example, the second UE sends the first SL synchronization signal in a first time domain unit, and the first UE receives the first SL synchronization signal in the first time domain unit. Optionally, the first SL synchronization signal is, for example, an S-SSB, or may be another signal used for synchronization.

A resource pool used by a UE to send and/or receive a signal may be configured by a network device, preconfigured in the UE, predefined in a protocol, or the like. For example, for a UE in coverage of a network, the network device may configure a resource pool for the UE. For another example, for a UE outside coverage of a network, the UE may preconfigure a resource pool. An example in which the resource pool is preconfigured in the UE is used. In this embodiment of this application, dedicated resource pools may be respectively preconfigured for a sensing UE and a communication UE in a mapping period. For example, a resource pool preconfigured for the sensing UE is referred to as a sensing resource pool, and a resource pool preconfigured for the communication UE is referred to as a communication resource pool. Both the sensing UE and the communication UE may send and/or receive a signal by using the resource pools preconfigured for the sensing UE and the communication UE. For example, the sensing UE may send a sensing reference signal by using an SL resource in the sensing resource pool, and/or receive an echo of the sensing reference signal by using an SL resource in the sensing resource pool; and the communication UE may send a communication signal and/or receive a communication signal by using an SL resource in the communication resource pool.

For example, duration of the mapping period may be the same as duration of an SL synchronization signal period (that is, a synchronization period), to be specific, 160 ms; duration of the mapping period may be an integer multiple of 160 ms; or duration of the mapping period may be less than 160 ms. Optionally, the duration of the mapping period may be less than or equal to duration of a DFN period. The duration of the DFN period is 1024 frames (frames), that is, 10240 ms.

In addition, an SL synchronization resource in a mapping period may be further preconfigured for a UE (or the SL synchronization resource may be predefined in a protocol, or may be preconfigured in the UE). The SL synchronization resource may be used by the UE to send or detect an SL synchronization signal. Alternatively, the SL synchronization resource may be predefined in a protocol, may be configured by a network device, or the like. The SL synchronization resource may include a time domain resource and/or a frequency domain resource, and the time domain resource included in the SL synchronization resource is, for example, SL time allocation (timeAllocation). Due to a limitation of a half-duplex mechanism of the UE, the UE needs to send and receive SL synchronization signals on different time domain resources. Therefore, at least two sets of SL synchronization resources may be configured for the UE in a mapping period. Each set of SL synchronization resources may be defined by using the following three parameters: (1) SL synchronization time domain unit offset. In other words, a set of SL synchronization resources may include one or more synchronization resources (where one SL synchronization resource may be used to send one SL synchronization signal), and the SL synchronization time domain unit offset is a time domain unit offset of a $1^{st}$ SL synchronization resource in a set of SL synchronization resources relative to a mapping period boundary (for example, start time or end time of the mapping period). (2) Time interval between adjacent SL synchronization time domain units, in other words, time domain unit between two adjacent SL synchronization resources in one or more SL synchronization resources included in a set of SL synchronization resources. (3) Quantity of SL synchronization resources (for example, SL synchronization time domain units) included in a mapping period. FIG. 3 is an example of a set of SL synchronization resources in a mapping period. FIG. 3 shows the foregoing three parameters.

In this embodiment of this application, a UE may include two types: a sensing type and a communication type, or it is understood as that UEs may be classified into a sensing UE and a communication UE. A type of the first UE is, for example, a first type, and the first type is, for example, a sensing type or a communication type. In other words, the first UE may be a sensing UE or a communication UE. A type of the second UE is, for example, a second type, and the second type may also be a sensing type or a communication type. In addition, the first type and the second type may be the same. For example, both the first UE and the second UE are sensing UEs or communication UEs. Alternatively, the first type and the second type may be different. For example, the first UE is a sensing UE, and the second UE is a communication UE; or the first UE is a communication UE, and the second UE is a sensing UE.

An SL synchronization signal may also include two types: a sensing type and a communication type. An SL synchronization signal of the sensing type may be referred to as a sensing SL synchronization signal, and a synchronization signal of the communication type may be referred to as a communication SL synchronization signal. A type of an SL synchronization signal is determined based on a type of a UE that sends the SL synchronization signal, or it is understood as that the type of the SL synchronization signal matches the type of the UE that sends the SL synchronization signal. The type of the SL synchronization signal matches the type of the UE that sends the SL synchronization signal. For example, a matching manner is that the type of the SL synchronization signal is the same as the type of the UE that sends the SL synchronization signal. For example, if a UE is a sensing UE, an SL synchronization signal sent by the UE is a sensing SL synchronization signal; or if a UE is a communication UE, an SL synchronization signal sent by the UE is a communication SL synchronization signal. In this case, if the second UE is a sensing UE, the first SL synchronization signal is a sensing SL synchronization signal; or if the second UE is a communication UE, the first SL synchronization signal is a communication SL synchronization signal.

Respective SL synchronization resources may be preconfigured for the sensing UE and the communication UE. An SL synchronization resource configured for the sensing UE may be referred to as a sensing synchronization resource, and an SL synchronization resource configured for the communication UE may be referred to as a communication synchronization resource. For example, at least one set of sensing synchronization resources may be preconfigured for the sensing UE in a mapping period, and at least one set of communication synchronization resources may be preconfigured for the communication UE in a mapping period. A sensing synchronization resource and a communication synchronization resource in a mapping period may not overlap in time domain, may partially overlap in time domain, or may completely overlap in time domain. For example, the first time domain unit belongs to an SL synchronization resource configured for a UE of the second type, and the type of the second UE is the second type. Therefore, the second UE may send an SL synchronization signal in the first time domain unit.

It can be learned from the foregoing that a mapping period may include at least two sets of SL synchronization resources, and each set of SL synchronization resources may further include one or more SL synchronization time domain units. For example, when each SL synchronization time domain unit may be used to send one SL synchronization signal, a set of SL synchronization resources may be used to send one or more SL synchronization signals. In this case, different SL synchronization signals in a mapping period may correspond to respective indexes, or different SL synchronization time domain units in a mapping period may correspond to respective indexes. An index of an SL synchronization signal is the same as an index of an SL synchronization time domain unit that carries the SL synchronization signal.

For example, indexes may be respectively set for different types of SL synchronization signals in a mapping period. (Alternatively, indexes may be respectively set for different types of SL synchronization time domain units. In the following embodiments of this application, an example in which an index is set for an SL synchronization signal is used for description.) For example, a mapping period includes a set of sensing synchronization resources, the set of sensing synchronization resources includes two SL synchronization time domain units, and two SL synchronization signals may be sent in the two SL synchronization time domain units. In this case, indexes 1 and 2 may be respectively set for the two SL synchronization signals in a time order. In addition, the mapping period further includes a set of communication synchronization resources, the set of communication synchronization resources includes four SL synchronization time domain units, and four SL synchronization signals may be sent in the four SL synchronization time domain units. In this case, indexes 1, 2, 3, and 4 may be respectively set for the four SL synchronization signals in a time order. Sorting SL synchronization signals of a same type helps reduce index values.

Alternatively, indexes may be set for all SL synchronization signals (or all SL synchronization time domain units) in a mapping period in a uniform manner. For example, a mapping period includes a set of sensing synchronization resources, the set of sensing synchronization resources includes two SL synchronization time domain units, and two SL synchronization signals may be sent in the two SL synchronization time domain units. In addition, the mapping period further includes a set of communication synchronization resources, the set of communication synchronization resources includes four SL synchronization time domain units, and four SL synchronization signals may be sent in the four SL synchronization time domain units. In this case, indexes 1, 2, 3, 4, 5, and 6 may be respectively set for the six SL synchronization signals in a time order. If all SL synchronization signals (or SL synchronization time domain units) are sorted, different sorting rules do not need to be maintained, and implementation by a UE is simple.

Optionally, the first SL synchronization signal may include a first sequence, and the first sequence may indicate an index of the first SL synchronization signal in a mapping period in which the first SL synchronization signal exists. If an index of an SL synchronization signal is indicated by a sequence, both the sensing UE and the communication UE can identify the sequence, so that both the sensing UE and the communication UE can determine a time domain position of a resource pool based on the index of the SL synchronization signal. Optionally, because both the sensing UE and the communication UE can identify the sequence, a UE of one type can determine an index of an SL synchronization signal corresponding to the UE of this type, and can also determine an index of an SL synchronization signal corresponding to another type of UE. For example, the sensing UE may receive a communication SL synchronization signal in addition to a sensing SL synchronization signal. The sensing UE can determine an index of the sensing SL synchronization signal based on a sequence included in the sensing SL synchronization signal, and can also determine an index of the communication SL synchronization signal based on a sequence included in the communication SL synchronization signal. Optionally, if the mapping period is shorter, a quantity of SL synchronization time domain units included in the mapping period is smaller, and an index value of a corresponding SL synchronization signal is smaller. Therefore, a quantity of bits occupied by the first sequence can be reduced.

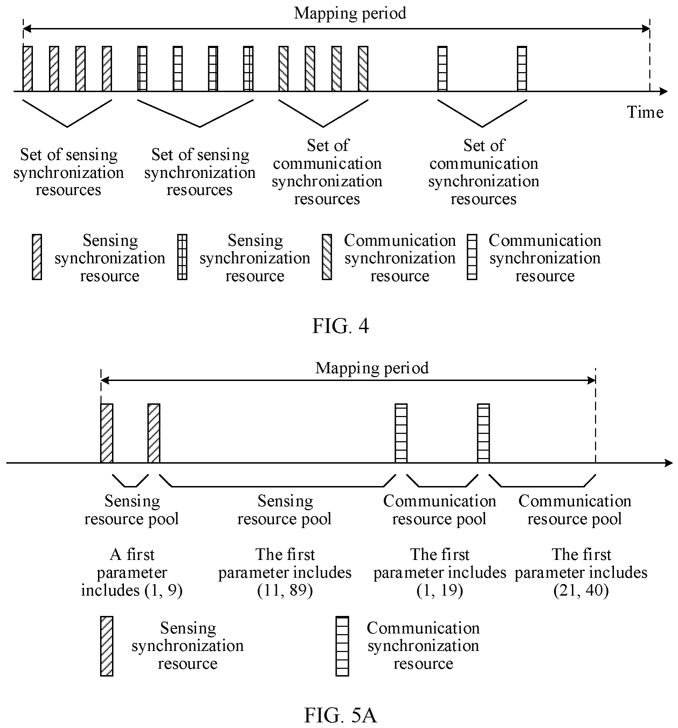

If indexes are respectively set for different types of SL synchronization signals in a mapping period, an index of the first SL synchronization signal may be determined by sorting all SL synchronization signals that are of a same type as the first SL synchronization signal and that are in a mapping period. For example, refer to FIG. 4. A mapping period includes two sets of sensing synchronization resources, the two sets of sensing synchronization resources each include four SL synchronization time domain units, and eight SL synchronization signals may be sent in eight SL synchronization time domain units. In this case, indexes of the eight SL synchronization signals are respectively 1 to 8. For example, if the first SL synchronization signal is a $2^{nd}$ SL synchronization signal (in a time order) in the eight SL synchronization signals, the index of the first SL synchronization signal is 2. Sorting SL synchronization signals (or SL synchronization time domain units) of a same type helps reduce index values, so that a quantity of bits occupied by the first sequence indicating an index can be reduced. For example, if eight SL synchronization signals of a same type are included in a mapping period, the first sequence needs to occupy only three bits to indicate indexes of the eight SL synchronization signals.

Alternatively, if indexes are set for all SL synchronization signals in a mapping period in a uniform manner, the index of the first SL synchronization signal may be determined by sorting all the SL synchronization signals in the mapping period. For example, still refer to FIG. 4. In addition to the foregoing two sets of sensing synchronization resources, the mapping period further includes two sets of communication synchronization resources. A set of communication synchronization resources includes four SL synchronization time domain units, the other set of communication synchronization resources includes two SL synchronization time domain units, and 14 SL synchronization time domain units in the mapping period may be used to send 14 SL synchronization signals. In this case, indexes of the 14 SL synchronization signals are respectively 1 to 14. For time domain positions of the two sets of sensing synchronization resources and the two sets of communication synchronization resources, refer to FIG. 5A. For example, if the first SL synchronization signal is a $2^{nd}$ SL synchronization signal (in a time order) in the 14 SL synchronization signals, the index of the first SL synchronization signal is 2.

In an optional implementation of the first sequence, the first sequence is, for example, an S-SSS and/or a P-SSS. Optionally, the first sequence is, for example, an S-SSS corresponding to a first cyclic shift and/or a P-SSS corresponding to a second cyclic shift. It may be understood that the S-SSS and/or the P-SSS may indicate an index of an SL synchronization signal by using a cyclic shift. If cyclic shifts corresponding to S-SSSs and/or P-SSSs included in two SL synchronization signals are different, indexes indicated by the S-SSSs and/or the P-SSSs in the two SL synchronization signals are different. If the first sequence is an S-SSS and a P-SSS, it may be considered that the first sequence is an SLSS sequence.

For example, G cyclic shifts may be allocated to S-PSSs included in SLSSs corresponding to a same SLSS ID (which may also be understood as S-PSSs corresponding to a same SLSS ID), and different cyclic shifts of S-PSSs corresponding to a same SLSS ID may indicate different indexes. G is a positive integer. For example, a value of G is equal to a total quantity of SL synchronization signals in a mapping period, is equal to a total quantity of sensing SL synchronization signals in a mapping period, or is equal to a total quantity of communication SL synchronization signals in a mapping period. For example, G cyclic shifts may be allocated to all S-PSSs included in SLSSs corresponding to each SLSS ID, and G cyclic shifts corresponding to S-PSSs included in SLSSs corresponding to one SLSS ID may indicate G indexes. When an SL synchronization signal corresponding to an SLSS ID is sent, an index of the SL synchronization signal may be determined, to set, for an S-PSS corresponding to the SLSS ID, a cyclic shift corresponding to the index. For example, if the index of the first SL synchronization signal sent by the second UE is 3 (where the index may be an index of the first SL synchronization signal in SL synchronization signals of a same type, or an index of the first SL synchronization signal in all SL synchronization signals in a mapping period), and an ID of an SLSS used by the first SL synchronization signal is 9, the second UE may determine G cyclic shifts corresponding to the SLSS ID 9. In addition, a cyclic shift corresponding to the index 3, for example, a cyclic shift A, is determined from the G cyclic shifts, so that the second UE may set the cyclic shift A for an S-PSS in the SLSS included in the first SL synchronization signal. A receive end of the first SL synchronization signal may determine, based on the ID of the SLSS included in the first SL synchronization signal and the cyclic shift A, that the index of the first SL synchronization signal is 3.

Alternatively, G cyclic shifts may be allocated to S-SSSs included in SLSSs corresponding to a same SLSS ID, or G cyclic shifts may be allocated to S-PSSs and S-SSSs included in SLSSs corresponding to a same SLSS ID. Implementations are both similar to that of allocating the G cyclic shifts to the same S-PSS. Details are not described again.

An SL synchronization signal originally includes an S-SSS and a P-SSS, and an index of the SL synchronization signal is indicated by an original sequence in the SL synchronization signal. In this case, no other sequence needs to be additionally added to the SL synchronization signal. This facilitates compatibility with an existing format of the SL synchronization signal.

In another optional implementation of the first sequence, the first sequence is, for example, a newly defined sequence in the first SL synchronization signal. For example, the first SL synchronization signal may include the first sequence and an SLSS sequence. An index is indicated by the newly defined sequence. In this case, a receive end of an SL synchronization signal can determine the index based on the newly defined sequence, so that functions of different sequences in the SL synchronization signal are clear. In addition, a large quantity of information bits may be needed to indicate the index of the SL synchronization signal. Therefore, the newly defined sequence indicates the index of the SL synchronization signal, so that more abundant information bits indicate the index.

S202: The first UE determines a time domain position of a first resource pool based on the index of the first SL synchronization signal. The first resource pool is used by a UE of the first type to send and/or receive a signal, or the first resource pool is a resource pool configured for the UE of the first type. The first UE is a UE of the first type. Therefore, the first UE may send and/or receive a signal by using the first resource pool. For example, if the first type is the sensing type, the first resource pool is a resource pool (also referred to as a sensing resource pool) configured for the sensing UE, and may be used by the sensing UE to send an SL sensing reference signal and/or receive an echo. For another example, if the first type is the communication type, the first resource pool is a resource pool (also referred to as a communication resource pool) configured for the communication UE, and may be used by the communication UE to send and/or receive an SL communication signal.

There may be different implementations in which the first UE determines the time domain position of the first resource pool based on the index of the first SL synchronization signal. The following provides examples for description.

1. An optional implementation in which the first UE determines the time domain position of the first resource pool based on the index of the first SL synchronization signal includes: The first UE may determine a first parameter based on the index of the first SL synchronization signal, to determine the time domain position of the first resource pool based on the first parameter. The first parameter may include a time domain unit offset (offset) between a second SL synchronization signal that exists in a mapping period and the first resource pool. In addition, the first parameter may further include duration (duration) of the first resource pool. A value of the time domain unit offset included in the first parameter may be a positive number or a negative number.

The type of the first UE is the first type, and the second SL synchronization signal matches the type of the first UE. It may be understood as that the first parameter may indicate a time domain unit offset between an SL synchronization signal of the first type in a mapping period and a resource pool used by a UE of the first type, so that the first UE can determine the time domain position of the first resource pool based on the second SL synchronization signal and the first parameter, and does not need to parse a PSBCH included in the first SL synchronization signal. Therefore, regardless of whether the first UE is a sensing UE or a communication UE, the first UE can determine the location of the first resource pool. In this way, dependency on the PSBCH is reduced and a synchronization success rate is improved. In this way, different types of UEs may all determine locations of respective resource pools, and a different type of UE does not mistakenly use a resource in a resource pool configured for another type of UE. This reduces a probability of a resource conflict. A unit of the time domain unit offset indicated by the first parameter may be a time domain unit, for example, a slot or an OFDM symbol.

It can be learned from the foregoing that the first UE is a UE of the first type, and the second UE is a UE of the second type. When the first type and the second type are a same type or different types, implementation of S202 may alternatively be different. The following provides examples for description.

1. The first type and the second type are a same type. Alternatively, it is understood as that a type of the first SL synchronization signal matches the first type, or a type of the first SL synchronization signal is the first type. For example, both the first UE and the second UE are sensing UEs, and the first SL synchronization signal is a sensing SL synchronization signal; or both the first UE and the second UE are communication UEs, and the first SL synchronization signal is a communication SL synchronization signal. In this case, the second SL synchronization signal and the first SL synchronization signal may be a same SL synchronization signal.

In this case, it is equivalent to that the first parameter indicates a time domain unit offset between the first SL synchronization signal and the first resource pool. Therefore, the first UE may determine the time domain position of the first resource pool based on a time domain position of the first SL synchronization signal and the first parameter. For example, the first UE may determine a start time domain position or an end time domain position of the first resource pool based on the time domain unit offset that is between the second SL synchronization signal in the mapping period and the first resource pool and that is included in the first parameter. Then, with reference to the duration that is of the first resource pool and that is included in the first parameter, the first UE may determine the start time domain position and the end time domain position of the first resource pool, that is, determine the time domain position occupied by the first resource pool. In this embodiment of this application, a start time domain position of an SL synchronization signal is, for example, a start time domain unit, for example, a start slot or a start OFDM symbol, of the SL synchronization signal; and an end time domain position of the SL synchronization signal is, for example, an end time domain unit, for example, an end slot or an end OFDM symbol, of the SL synchronization signal. In this embodiment of this application, a start time domain position of a resource pool is, for example, a start time domain unit, for example, a start slot or a start symbol, of the resource pool; and an end time domain position of the resource pool is, for example, an end time domain unit, for example, an end slot or an end symbol, of the resource pool.

For example, the duration that is of the first resource pool and that is included in the first parameter may be a quantity of consecutive time domain units occupied by (or included in) the first resource pool. In this case, the first UE may determine the start time domain position and the end time domain position of the first resource pool based on the first parameter.

Considering that a resource pool may include consecutive time domain units in time domain or may include inconsecutive time domain units in time domain, the first parameter may include at least one pair of parameters. Each pair of parameters in the at least one pair of parameters may include one time domain unit offset (for example, indicated as an offset (offset)) and one quantity (for example, indicated as duration). The time domain unit offset is a time domain unit offset between an SL synchronization signal of the first type in a mapping period and a resource pool used by a UE of the first type, and the quantity is a quantity of consecutive time domain units included in the first resource pool. Different pairs of parameters may include different time domain unit offsets, and different pairs of parameters may include a same quantity or different quantities.

Refer to FIG. 5A. The first resource pool is, for example, a sensing resource pool, the start time domain position of the first resource pool is located in a slot 1 in a mapping period shown in FIG. 5A, and the first resource pool occupies slots 1 to 9 and slots 11 to 99. In addition, the first SL synchronization signal is located in a slot 0 in the mapping period. In this case, the first parameter may include two pairs of parameters. A time domain unit offset included in a $1^{st}$ pair of parameters is 1. This is equivalent to indicating the slot 1. In addition, a quantity included in the $1^{st}$ pair of parameters is 9. A time domain unit offset included in a $2^{nd}$ pair of parameters is 11. This is equivalent to indicating the slot 11. In addition, a quantity included in the $2^{nd}$ pair of parameters is 89.

2. The first type and the second type are different types. Alternatively, it is understood as that a type of the first SL synchronization signal does not match the first type, or a type of the first SL synchronization signal is the second type. For example, the first UE is a sensing UE, the second UE is a communication UE, and the first SL synchronization signal is a communication SL synchronization signal; or the first UE is a communication UE, the second UE is a sensing UE, and the first SL synchronization signal is a sensing SL synchronization signal. In this case, a type of the second SL synchronization signal is the first type, and the second SL synchronization signal and the first SL synchronization signal are different types of SL synchronization signals. For example, the first SL synchronization signal is a communication SL synchronization signal, and the second SL synchronization signal is a sensing SL synchronization signal; or the first SL synchronization signal is a sensing SL synchronization signal, and the second SL synchronization signal is a communication SL synchronization signal.

In this case, the first UE may first determine the second SL synchronization signal based on the first SL synchronization signal. For example, the first UE may determine a first time domain position based on a second parameter, where the first time domain position is a time domain position used to carry the second SL synchronization signal. The second parameter may indicate a time domain unit offset between an SL synchronization signal that matches the first type and an SL synchronization signal that does not match the first type. The SL synchronization signal that matches the first type is, for example, an SL synchronization signal of the first type, and the SL synchronization signal that does not match the first type is, for example, an SL synchronization signal of the second type. Therefore, the second parameter may indicate a time domain unit offset between the SL synchronization signal of the first type and the SL synchronization signal of the second type. For example, the second parameter indicates a time domain unit offset between a sensing SL synchronization signal and a communication SL synchronization signal. A value of the time domain unit offset indicated by the second parameter may be a positive number or a negative number. It can be learned from the foregoing descriptions that a sensing synchronization resource configured for the sensing UE and a communication synchronization resource configured for the communication UE may not overlap, may partially overlap, or may completely overlap. Therefore, a time domain distance between the sensing SL synchronization signal and the communication SL synchronization signal may be greater than or equal to 0. A mapping period may include at least one set of sensing synchronization resources and at least one set of communication synchronization resources. The second parameter may indicate a time domain unit offset between a sensing SL synchronization signal and a communication SL synchronization signal that are adjacent in time domain. Alternatively, the second parameter may indicate a time domain unit offset between an SL synchronization signal (for example, the first SL synchronization signal) of the second type in a mapping period and each remaining SL synchronization signal of the first type in the same mapping period. Alternatively, the second parameter may indicate a time domain unit offset between an SL synchronization signal (for example, the first SL synchronization signal) of the second type in a mapping period and each SL synchronization signal of the first type in the same mapping period. The remaining SL synchronization signal of the first type in the same mapping period is an SL synchronization signal that is of the first type and whose time domain position is not reached in the mapping period.

The first time domain position is a time domain position in which an SL synchronization signal of the first type is located. It may be understood as that, after receiving the first SL synchronization signal, the first UE determines that the type of the first SL synchronization signal does not match the type of the first UE, and the first parameter indicates an (offset) between an SL synchronization signal that matches the first type and the first resource pool. Therefore, the first UE may first determine, based on the second parameter, a time domain position in which the SL synchronization signal that matches the first type is located, for example, the first time domain position.

Still refer to FIG. 5A. For example, the first SL synchronization signal is a sensing SL synchronization signal, and is located in a slot 0 in a mapping period shown in FIG. 5A. The first UE is a communication UE. In this case, the type of the first SL synchronization signal does not match the type of the first UE. In the mapping period, there are still two remaining communication synchronization resources: a slot 18 and a slot 30. The second parameter may include two parameters. A time domain unit offset indicated by a 1st parameter is 18. This is equivalent to indicating the slot 18. A time domain unit offset indicated by a 2nd parameter is 30. This is equivalent to indicating the slot 30. In this case, the first time domain position may be the slot 18, or may be the slot 30. Alternatively, if a communication SL synchronization signal adjacent to the first SL synchronization signal in time domain is an SL synchronization signal carried in the slot 18, the second parameter may alternatively include one parameter. If a time domain unit offset indicated by the parameter is 18, the first time domain position may be the slot 18.

After determining the first time domain position, the first UE may receive an SL synchronization signal, for example, the second SL synchronization signal, at the first time domain position. A type of the second SL synchronization signal matches the first type, for example, the second SL synchronization signal is an SL synchronization signal of the first type. After receiving the second SL synchronization signal, the first UE may determine the time domain position of the first resource pool based on the first parameter. That the second SL synchronization signal matches the first type is equivalent to that the first parameter indicates the time domain unit offset between the second SL synchronization signal and the first resource pool (and indicates the duration of the first resource pool). Therefore, the first UE may determine the time domain position of the first resource pool based on a time domain position of the second SL synchronization signal and the first parameter. Alternatively, the first UE may not need to receive an SL synchronization signal at the first time domain position. Provided that the first time domain position is determined, the first UE may determine the time domain position of the first resource pool based on the first parameter. The first parameter indicates a time domain distance between the first time domain position and the first resource pool, and indicates the duration of the first resource pool.

Still refer to FIG. 5A. The first resource pool is, for example, a communication resource pool, the start time domain position of the first resource pool is located in a slot 101 in a mapping period shown in FIG. 5A, and the first resource pool occupies slots 101 to 119 and slots 121 to 160. For example, the first time domain position is a slot 100 in the mapping period. In this case, the first parameter may include two pairs of parameters. A time domain unit offset included in a 1st pair of parameters is 1. This is equivalent to indicating the slot 101. In addition, a quantity included in the 1st pair of parameters is 19. A time domain unit offset included in a 2nd pair of parameters is 21. This is equivalent to indicating the slot 121. In addition, a quantity included in the 2nd pair of parameters is 40.

The first parameter and/or the second parameter may be preconfigured in the first UE, may be predefined in a protocol, may be configured by a network device, or the like.

Optionally, when determining the location of the first resource pool, the first UE may further consider a third parameter in addition to the first parameter (or the first parameter and the second parameter). The third parameter indicates, for example, the mapping period, for example, the duration of the mapping period. In this case, the first UE may determine the time domain position of the first resource pool based on the first parameter and the third parameter (or based on the first parameter, the second parameter, and the third parameter). The third parameter may be preconfigured in the first UE, may be predefined in a protocol, may be configured by a network device, or the like. In this embodiment of this application, it is assumed that, in different mapping periods, relative time domain positions of a sensing synchronization resource are the same, relative time domain positions of a communication synchronization resource are the same, relative time domain positions of a communication resource pool are the same, and relative time domain positions of a sensing resource pool are the same. Therefore, that the first UE determines a time domain position of a resource pool in a mapping period is equivalent to that a time domain position of the resource pool in each mapping period is determined.

In this embodiment of this application, one or more of a mapping parameter, a sensing synchronization resource, a communication synchronization resource, or a resource pool may be configured (for example, configured by a network device, preconfigured, or predefined in a protocol). The mapping parameter may include one or more of the first parameter, the second parameter, or the third parameter. For example, if the sensing synchronization resource and the communication synchronization resource are configured, the second parameter may be deduced accordingly, and the second parameter does not need to be configured.

2. Another optional implementation in which the first UE determines the time domain position of the first resource pool based on the index of the first SL synchronization signal includes: The first UE may determine the time domain position of the first resource pool based on a fourth parameter. The fourth parameter may include the index of the first SL synchronization signal, and the fourth parameter may include a time domain distance between a start time domain position and an end time domain position of the first resource pool in a mapping period, and a time domain distance between two adjacent SL synchronization signals. The fourth parameter may be preconfigured in a UE, may be configured by a network device or another UE, may be configured by a higher layer of the first UE, or may be predefined in a protocol. The time domain distance between the two adjacent SL synchronization signals may be a time domain distance between start time domain positions of the two SL synchronization signals, a time domain distance between end time domain positions of the two SL synchronization signals, or a time domain distance between an end time domain position of a former SL synchronization signal and a start time domain position of a latter SL synchronization signal.

The first UE can learn that a start time domain position of the first resource pool is a next time domain unit of a time domain position in which a $1^{st}$ SL synchronization signal in the mapping period is located. For example, if an index of the $1^{st}$ SL synchronization signal in the mapping period is 0, the start time domain position of the first resource pool is the next time domain unit of the time domain position in which the SL synchronization signal whose index is 0 is located. In addition, the fourth parameter includes the time domain distance between the start time domain position and the end time domain position of the first resource pool in the mapping period, so that the first UE can determine the end time domain position of the first resource pool. In this way, the first UE determines the start time domain position and the end time domain position of the first resource pool. In addition, the fourth parameter further includes the time domain distance between the two adjacent SL synchronization signals. In this case, the first UE may remove, from the determined first resource pool, a time domain unit in which an SL synchronization signal is located, so that the first UE determines the time domain position of the first resource pool.

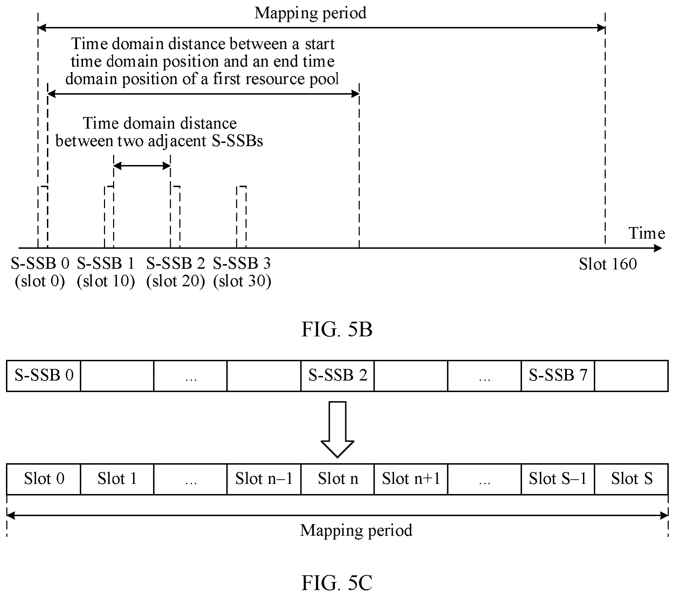

For example, the first UE receives the first SL synchronization signal in a slot 10. For example, a type of the first SL synchronization signal matches the type of the first UE. The index of the first SL synchronization signal is 1. For example, an index of a $1^{st}$ SL synchronization signal in the mapping period is 0, and the time domain distance that is between the two adjacent SL synchronization signals and that is included in the fourth parameter is 10 slots. The first UE may determine that the start time domain position of the first resource pool is a slot 1. The time domain distance that is between the start time domain position and the end time domain position of the first resource pool in the mapping period and that is included in the fourth parameter is 100 slots, and the first UE may determine that the end time domain position of the first resource pool is a slot 100. For this, refer to FIG. 5B. In FIG. 5B, an example in which the SL synchronization signal is an S-SSB is used. In addition, the time domain distance between the two adjacent SL synchronization signals is 10 slots. For example, if four synchronization slots of this type are configured in a mapping period, the first UE may determine that a slot (j×10) does not belong to the first resource pool, where j is a positive integer less than or equal to 3. For example, the first UE may determine that a slot 10, a slot 20, and a slot 30 do not belong to the first resource pool.

In the foregoing example, the type of the first UE matches the type of the first SL synchronization signal. Alternatively, the type of the first UE may not match a type of the first SL synchronization signal. The following describes how the first UE determines the time domain position of the first resource pool in this case.

The first UE receives the first SL synchronization signal, and may determine the type of the first SL synchronization signal. For example, the type of the first SL synchronization signal does not match the type of the first UE. In this case, the first UE may determine, by using the foregoing second parameter, a time domain position of an SL synchronization signal that matches the type of the first UE. For example, the second parameter may indicate a time domain unit offset from the first SL synchronization signal to a $1^{st}$ SL synchronization signal of the first type in a same mapping period. In this case, the first UE may determine, based on the second parameter, a time domain position in which the $1^{st}$ SL synchronization signal of the first type in the mapping period is located. If the start time domain position of the first resource pool is a next time domain unit of the time domain position in which the $1^{st}$ SL synchronization signal in the mapping period is located, the first UE may determine the start time domain position of the first resource pool. In addition, the fourth parameter includes the time domain distance between the start time domain position and the end time domain position of the first resource pool in the mapping period, so that the first UE can determine the end time domain position of the first resource pool. In this way, the first UE determines the start time domain position and the end time domain position of the first resource pool. In addition, the fourth parameter further includes the time domain distance between the two adjacent SL synchronization signals. In this case, the first UE may remove, from the determined first resource pool, a time domain unit in which an SL synchronization signal is located, so that the first UE determines the time domain position of the first resource pool.

For example, the first UE receives the first SL synchronization signal in a slot 100, and the type of the first SL synchronization signal is different from the type of the first UE. For example, the first UE is of the first type, and the first SL synchronization signal is of the second type. The second parameter indicates that the time domain unit offset from the first SL synchronization signal to the 1st SL synchronization signal of the first type in the mapping period is -100. In this case, the first UE may determine that the time domain position in which the 1st SL synchronization signal of the first type in the mapping period is located is a slot 0, to determine that the start time domain position of the first resource pool is a slot 1. The time domain distance that is between the start time domain position and the end time domain position of the first resource pool in the mapping period and that is included in the fourth parameter is 100 slots, and with reference to the parameter, the first UE may determine that the end time domain position of the first resource pool is a slot 100. In addition, if a time domain distance that is between two adjacent SL synchronization signals of the first type and that is included in the fourth parameter is 10 slots, the first UE may determine that a slot ($y \times 10$) does not belong to the first resource pool. For example, four synchronization slots of the first type are configured in a mapping period, and y is a positive integer less than or equal to 3. For example, the first UE may determine that a slot 10, a slot 20, and a slot 30 do not belong to the first resource pool.

Optionally, if the first UE determines the time domain position of the first resource pool in the second manner, between SL synchronization signals of a same type in a mapping period, a resource pool whose type does not match the type of the SL synchronization signal should not exist. In addition, a resource pool always starts from a next time domain unit of a 1st SL synchronization signal in a mapping period. It may also be understood as that a 1st SL synchronization signal in a mapping period may be considered as indication information, and the indication information may indicate that a resource pool that matches a type of the SL signal exists in subsequent specific duration.

3. Still another optional implementation in which the first UE determines the time domain position of the first resource pool based on the index of the first SL synchronization signal includes: The first UE determines, based on the index of the first SL synchronization signal, a physical index of a time domain unit in which the first SL synchronization signal is located, and the first UE may determine, based on the physical index, time domain positions of all time domain units in a mapping period in which the first SL synchronization signal exists, so that the first UE can determine the time domain position of the first resource pool in the mapping period based on the time domain positions of all the time domain units. An index of an SL synchronization signal may be considered as a logical index of the SL synchronization signal.

For example, a correspondence (or an association relationship, or a mapping relationship) between the index of the SL synchronization signal and a physical index of a time domain unit in which the SL synchronization signal is located may be preconfigured, or the correspondence may be configured by a network device, may be configured by another UE, or may be predefined in a protocol. Therefore, the first UE can determine, based on the index of the first SL synchronization signal and the correspondence, the physical index of the time domain unit in which the first SL synchronization signal is located. The first UE can then determine, based on the physical index of the time domain unit in which the first SL synchronization signal is located, time domain positions or physical indexes of all time domain units in a mapping period. The first UE may determine the time domain position of the first resource pool based on the time domain positions of all the time domain units in the mapping period.

FIG. 5C is a diagram of a correspondence between an index of an SL synchronization signal and a physical index of a time domain unit in which the SL synchronization signal is located. In FIG. 5C, an example in which the SL synchronization signal is an S-SSB, the time domain unit is a slot, and a total quantity of slots included in a mapping period is S is used, where S is a positive integer. For example, the correspondence indicates that an S-SSB index 0 corresponds to a slot 0, an S-SSB index 2 corresponds to a slot n, an S-SSB index 7 corresponds to a slot S-1, and the like. n is a positive integer less than S-1.

Optionally, the first UE determines a time domain position of the first resource pool in a mapping period based on time domain positions of all time domain units in the mapping period. In an optional implementation, the first UE may determine the time domain position of the first resource pool in the mapping period based on the time domain positions of all the time domain units and a bitmap (bitmap). For example, the bitmap is included in configuration information of a resource pool. The bitmap may indicate a time domain unit that is in a logic time domain unit set or a remaining time domain unit set and that belongs to the first resource pool. It can be learned that, in this embodiment of this application, the bitmap corresponds to the mapping period, but does not correspond to the DFN period, so that the first UE can determine a time domain position of a resource pool in a mapping period based on the bitmap. Both the remaining time domain unit set and the logic time domain unit set are determined based on the time domain positions of all the time domain units. The following provides descriptions.

After determining the time domain positions of all the time domain units, the first UE may remove, from all the time domain units in the mapping period, a time domain unit that is not included in the first resource pool, to obtain a time domain unit set, for example, referred to as a remaining time domain unit set. The remaining time domain unit set may be indicated as ($f_0, f_1, \ldots, f_{NT-1-N_s}$). $f_i$ indicates an index of an i$^{th}$ time domain unit in the remaining time domain unit set, and $f_i$ is a logical

index. $N_T$ indicates a total quantity of time domain units included in a mapping period. $N_S$ indicates a total quantity of SL synchronization resources included in a mapping period (for example, indicates a total quantity of SL synchronization time domain units included in a mapping period), or $N_S$ indicates a total quantity of time domain units included in a mapping period and not included in the first resource pool. Optionally, the time domain unit not included in the first resource pool may include one or more of the following: a time domain unit used to send an SL synchronization signal (which may be referred to as an SL synchronization time domain unit), a downlink time domain unit in a time division duplex (time division duplex, TDD) system, a special time domain unit, or a reserved time domain unit.

After obtaining the remaining time domain unit set, if a quantity of time domain units included in the remaining time domain unit set cannot be exactly divided by a length of the bitmap (in other words, a quantity of bits included in the bitmap), the first UE may determine a quantity of reserved time domain units included in the remaining time domain unit set and a time domain position of the reserved time domain unit, to remove the reserved time domain unit from the remaining time domain unit set. For example, a remaining time domain unit set obtained through removing the reserved time domain unit is referred to as a logic time domain unit set. The quantity of reserved time domain units may satisfy the following relationship:

$$N_{reserved} = (N_T - N_S) \bmod L \qquad \text{(Formula 1)}$$

$N_{reserved}$ indicates the quantity of reserved time domain units, L indicates the length of the bitmap, and mod indicates a modulo operation.

The time domain position of the reserved time domain unit may satisfy the following relationship:

$$r = \left\lfloor \frac{m(N_T - N_S)}{N_{reserved}} \right\rfloor \qquad \text{(Formula 2)}$$

r indicates the time domain position of the reserved time domain unit, for example, indicates an index of the reserved time domain unit in the remaining time domain unit set. m = 0, 1, ... , and $N_{reserved}$ - 1. Formula 2 may be understood as that an $f_r^{th}$ time domain unit in the remaining time domain unit set is a reserved time domain unit.

Alternatively, after the remaining time domain unit set is obtained, if a quantity of time domain units included in the remaining time domain unit set can be exactly divided by a length of the bitmap, the first UE may not need to determine a quantity of reserved time domain units included in the remaining time domain unit set and a time domain position of the reserved time domain unit.

After obtaining the logic time domain unit set, the first UE may reset an index of a time domain unit included in the logic time domain unit set. For example, the logic time domain unit set is indicated as $(g_0, g_1, ... , g_{N_T-1-N_S-N_{reserved}})$. The index is a logical index. Alternatively, if the quantity of time domain units included in the remaining time domain unit set can be exactly divided by the length of the bitmap, the logic time domain unit set is the remaining time domain unit set, and the first UE may not need to reset an index.

For example, the bitmap is indicated as $x(b_0, b_1, ..., b_{L-1})$. For a time domain unit $g_k$ in the logic time domain unit set, when $b_{k'} = 1$ is satisfied, the slot $g_k$ belongs to the first resource pool, where $k' = k \bmod L$. Alternatively, if the first UE does not reset the index of the remaining time domain unit set, for a time domain unit $f_k$ in the remaining time domain unit set, when $b_{k'} = 1$ is satisfied, the slot $f_k$ belongs to the first resource pool, where $k' = k \bmod L$.

As described above, after receiving the first SL synchronization signal, the first UE may identify the type of the first SL synchronization signal, to determine the time domain position of the first resource pool in the foregoing manner. Optionally, in this embodiment of this application, a type of an SL synchronization signal may be indicated by a sequence included in the SL synchronization signal. For example, the first SL synchronization signal may include a second sequence. The second sequence may indicate the type of the first SL synchronization signal, for example, indicate that the first SL synchronization signal is of a sensing type or a communication type.

In an optional implementation of the second sequence, the second sequence is an SLSS sequence included in the first SL synchronization signal. An SL synchronization signal originally includes an SLSS sequence, and a type of the SL synchronization signal is indicated by the original sequence in the SL synchronization signal. In this case, no other sequence needs to be additionally added to the SL synchronization signal. This facilitates compatibility with an existing format of the SL synchronization signal. For example, SLSS IDs may be grouped into two sets, each of the two sets includes at least one SLSS ID. For example, the two sets include a set 1 and a set 2. An SLSS (or an SLSS sequence) indicated by an SLSS ID included in the set 1 may be used for an SL synchronization signal of a sensing type, and an SLSS (or an SLSS sequence) indicated by an SLSS ID included in the set 2 may be used for an SL synchronization signal of a communication type. In this case, if an SLSS ID corresponding to an SLSS included in the first SL synchronization signal belongs to the set 1, the first UE may determine that the type of the first SL synchronization signal is the sensing type; or if an SLSS ID corresponding to an SLSS included in the first SL synchronization signal belongs to the set 2, the first UE may determine that the type of the first SL synchronization signal is the communication type.

When SLSS IDs are grouped into sets, SLSS IDs corresponding to different types of synchronization sources may be separately grouped into two sets, and two sets corresponding to each type of synchronization source may respectively correspond to the sensing type and the communication type. A device that sends a synchronization signal may be referred to as a synchronization source, and types of synchronization sources include, for example, an access network device, a satellite device, or a UE. Different types of synchronization sources may separately correspond to SLSS IDs, and SLSS IDs corresponding to each type of synchronization source may be grouped into two sets. For example, after receiving the first SL synchronization signal, the first UE may determine a synchronization source associated with the first SL synchronization signal, and further determine that the SLSS ID of the first SL synchronization signal belongs to a set corresponding to the synchronization source, to determine that the type of the first SL synchronization signal is a type corresponding to the set. The synchronization source associated with the first SL synchronization signal may be indicated by the first SL synchronization signal. For example, if the first SL synchronization signal is from another UE, the first SL synchronization signal may include information indicating the synchronization source associated with the first SL synchronization signal. Alternatively, the synchronization source associated with the first SL synchronization signal may be a transmit end of the first SL synchronization signal. For example, if the first SL synchronization signal is from an access network device, the synchronization source associated with the first SL synchronization signal is the access network device; or if the first SL synchronization signal is from a satellite device, the synchronization source associated with the first SL synchronization signal is the satellite device.

In another optional implementation of the second sequence, the second sequence is, for example, a newly defined sequence in the first SL synchronization signal. For example, the first SL synchronization signal may include the second sequence and an SLSS sequence. A type of an SL synchronization signal is indicated by a newly defined sequence. In this case, a receive end of the SL synchronization signal can determine the type of the SL synchronization signal based on the newly defined sequence, so that functions of different sequences in the SL synchronization signal are clear.

In still another optional implementation of the second sequence, the second sequence includes an S-PSS and/or an S-SSS in the first SL synchronization signal. Optionally, the second sequence is an S-PSS having a third cyclic shift and/or an S-SSS having a fourth cyclic shift. For example, F cyclic shifts may be allocated to an S-PSS included in an SLSS corresponding to each SLSS ID, and different cyclic shifts corresponding to each SLSS ID may indicate different types. F is an integer greater than or equal to 2. For example, a value of F is equal to a quantity of types of SL synchronization signals. For example, F cyclic shifts allocated to an S-PSS corresponding to an SLSS ID used by the first SL synchronization signal specifically include a third cyclic shift and a fifth cyclic shift, where the third cyclic shift indicates the second type, and the fifth cyclic shift indicates the first type. For example, the second type is a sensing type, and the first type is a communication type; or the second type is a communication type, and the second type is a sensing type. If the type of the first SL synchronization signal is the second type, the second UE may set the third cyclic shift for the S-PSS included in the first SL synchronization signal, to indicate the second type. The first UE can determine, based on that a cyclic shift of the S-PSS included in the first SL synchronization signal is the third cyclic shift, that the type of the first SL synchronization signal is the second type. Alternatively, F cyclic shifts may be allocated to an S-SSS included in an SLSS corresponding to each SLSS ID, or F cyclic shifts may be allocated to an S-PSS and an S-SSS included in an SLSS corresponding to each SLSS ID. Implementations are both similar to that of allocating the F cyclic shifts to the S-PSS included in the SLSS corresponding to each SLSS ID. Details are not described again.

Alternatively, a type of an SL synchronization signal may not be indicated by a sequence included in the SL synchronization signal. For example, based on the foregoing descriptions, indexes may be set for all SL synchronization signals in a mapping period, and a correspondence between an index in a mapping period and a type of an SL synchronization signal may be preconfigured (or configured by a network device, predefined in a protocol, or the like). In this case, the type of the first SL synchronization signal can be determined based on the index of the first SL synchronization signal and the correspondence, without using the second sequence. For example, a mapping period includes a set of sensing synchronization resources, the set of sensing synchronization resources includes two SL synchronization time domain units, and two SL synchronization signals may be sent in the two SL synchronization time domain units. In addition, the mapping period further includes a set of communication synchronization resources, the set of communication synchronization resources includes four SL synchronization time domain units, and four SL synchronization signals may be sent in the four SL synchronization time domain units. In this case, indexes 1, 2, 3, 4, 5, and 6 may be respectively set for the six SL synchronization signals in a time order. For example, it is preconfigured that in a mapping period, indexes 1 and 2 of SL synchronization signals correspond to SL synchronization signals of a sensing type, and indexes 3 to 6 of SL synchronization signals correspond to SL synchronization signals of a communication type. In this case, the first UE can determine the type of the first SL synchronization signal based on the index of the first SL synchronization signal. In this implementation, the second sequence does not need to be introduced. This helps simplify an indication manner.

In this embodiment of this application, after receiving the first SL synchronization signal, the first UE can determine the time domain position of the first resource pool based on the index of the first SL synchronization signal. The index of the first SL synchronization signal is determined based on the first sequence included in the first SL synchronization signal, and both a UE of a sensing type and a UE of a communication type can identify the first sequence. In this way, the UEs may not need to implement synchronization based on a PSBCH, but can determine time domain positions of respective resource pools based on sequences included in received SL synchronization signals. A different type of UE does not mistakenly use a resource in a resource pool configured for another type of UE. This reduces a probability of a resource conflict.

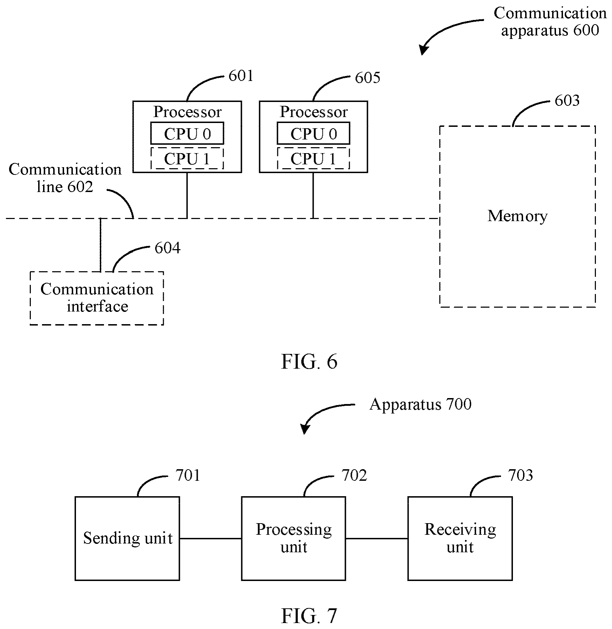

FIG. 6 is a diagram of a structure of a communication apparatus according to an embodiment of this application. The communication apparatus 600 may be the first UE in the embodiment shown in FIG. 2 or a circuit system of the first UE, and is configured to implement the method corresponding to the first UE in the foregoing method embodiments. Alternatively, the communication apparatus 600 may be the second UE in the embodiment shown in FIG. 2 or a circuit system of the second UE, and is configured to implement the method corresponding to the second UE in the foregoing method embodiments. For example, a circuit system is a chip system.

The communication apparatus 600 includes at least one processor 601. The processor 601 may be configured for internal processing of the apparatus, to implement a specific control processing function. Optionally, the processor 601 includes instructions. Optionally, the processor 601 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 600 includes one or more memories 603, configured to store instructions. Optionally, the memory 603 may further store data. The processor and the memory may be separately disposed, or may be integrated together.

Optionally, the communication apparatus 600 includes a communication line 602 and at least one communication interface 604. Because the memory 603, the communication line 602, and the communication interface 604 are all optional, the memory 603, the communication line 602, and the communication interface 604 are all indicated by dashed lines in FIG. 6.

Optionally, the communication apparatus 600 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 600 via the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 601 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 602 may include a path for information transmission between the foregoing components.

The communication interface 604 is any apparatus like a transceiver, and is configured to communicate with another device or a communication network like an ethernet, a radio access network (radio access network, RAN), a wireless local area network (wireless local area network, WLAN), or a wired access network.

The memory 603 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, and the like), a magnetic disk storage medium, another magnetic storage device, or any other medium that can carry or store expected program code in a form of an instruction or a data structure and that can be accessed by a computer. However, the memory 603 is not limited thereto. The memory 603 may exist independently, and is connected to the processor 601 through the communication line 602. Alternatively, the memory 603 may be integrated with the processor 601.

The memory 603 is configured to store computer-executable instructions for executing the solutions of this application, and the processor 601 controls execution. The processor 601 is configured to execute the computer-executable instructions stored in the memory 603, to implement the steps performed by the first UE or the second UE in the embodiment shown in FIG. 2.

Optionally, the computer-executable instructions in this embodiment of this application may also be referred to as application program code. This is not specifically limited in this embodiment of this application.

During specific implementation, in an embodiment, the processor 601 may include one or more CPUs such as a CPU 0 and a CPU 1 in FIG. 6.

During specific implementation, in an embodiment, the communication apparatus 600 may include a plurality of processors such as the processor 601 and a processor 605 in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 6 is a chip, for example, a chip of the first UE or a chip of the second UE, the chip includes the processor 601 (which may further include the processor 605), the communication line 602, and the communication interface 604. Optionally, the chip may include the memory 603. Specifically, the communication interface 604 may be an input interface, a pin, a circuit, or the like. The memory 603 may be a register, a cache, or the like. The processor 601 and the processor 605 each may be a general-purpose CPU, a microprocessor, an ASIC, or one or more integrated circuits configured to control program execution of the resource pool determining method in any one of the foregoing embodiments.

In this embodiment of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in this embodiment of this application, module division is an example, and is merely logical function division. In actual implementation, another division manner may be used. For example, when each functional module is obtained through division based on each corresponding function, FIG. 7 is a diagram of an apparatus. The apparatus 700 may be the first UE or the second UE in the foregoing method embodiments, or a chip of the first UE or a chip of the second UE. The apparatus 700 includes a sending unit 701, a processing unit 702, and a receiving unit 703.

It should be understood that the apparatus 700 may be configured to implement the steps performed by the first UE or the second UE in the resource pool determining method in embodiments of this application. For related features, refer to any one of embodiments shown in FIG. 2. Details are not described herein again.

Optionally, functions/implementation processes of the sending unit 701, the receiving unit 703, and the processing unit 702 in FIG. 7 may be implemented by the processor 601 in FIG. 6 by invoking the computer-executable instructions stored in the memory 603. Alternatively, a function/implementation process of the processing unit 702 in FIG. 7 may be implemented by the processor 601 in FIG. 6 by invoking the computer-executable instructions stored in the memory 603, and functions/implementation processes of the sending unit 701 and the receiving unit 703 in FIG. 7 may be implemented through the communication interface 604 in FIG. 6.

Optionally, when the apparatus 700 is a chip or a circuit, functions/implementation processes of the sending unit 701 and the receiving unit 703 may alternatively be implemented through a pin, a circuit, or the like.

This application further provides a computer-readable storage medium. The computer-readable storage medium stores a computer program or instructions. When the computer program or the instructions are run, the method performed by the first UE or the second UE in the foregoing method embodiments is implemented. In this way, the functions in the foregoing embodiments may be implemented in a form of a software functional unit and sold or used as an independent product. Based on such an understanding, the technical solutions of this application essentially, the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first UE or the second UE in any one of the foregoing method embodiments.

An embodiment of this application further provides a processing apparatus, including a processor and an interface. The processor is configured to perform the method performed by the first UE or the second UE in any one of the foregoing method embodiments.

All or a part of the foregoing embodiments may be implemented by software, hardware, firmware, or any combination thereof. When the software is used for the implementation, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Various illustrative logic units and circuits described in embodiments of this application may implement or operate the described functions by a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor can read information from the storage medium and write information into the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may alternatively be loaded onto the computer or another programmable data processing device, so that a series of operation steps are performed on the computer or the another programmable device to generate computer-implemented processing, and instructions executed on the computer or the another programmable device provide steps for implementing a function specified in one or more procedures in the flowchart and/or one or more blocks in the block diagram.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that in embodiments of this application, the first UE and/or the second UE may perform a part of or all steps in embodiments of this application. These steps or operations are merely examples. In embodiments of this application, other operations or variations of various operations may be further performed. In addition, the steps may be performed in an order different from an order presented in embodiments of this application, and not all operations in embodiments of this application may be performed.

## Claims

1. A resource pool determining method, applied to a first terminal device or a chip of the first terminal device, wherein the method comprises:

   receiving a first sidelink synchronization signal in a first time domain unit, wherein the first sidelink synchronization signal comprises a first sequence, and the first sequence indicates an index of the first sidelink synchronization signal; and
   determining a time domain position of a first resource pool based on the index of the first sidelink synchronization signal.

2. The method according to claim 1, wherein the first resource pool is used by the first terminal device to send and receive signals.

3. The method according to claim 1 or 2, wherein the index of the first sidelink synchronization signal is determined by sorting all sidelink synchronization signals that are of a same type as the first sidelink synchronization signal and that are in a mapping period.

4. The method according to any one of claims 1 to 3, wherein

   the first sequence is a sidelink secondary synchronization signal S-SSS sequence and/or a sidelink primary synchronization signal S-PSS sequence; or

the first sidelink synchronization signal comprises the first sequence, an S-PSS sequence, and an S-SSS sequence.

5. The method according to claim 4, wherein that the first sequence is the S-SSS sequence and/or the S-PSS sequence comprises:

the first sequence is an S-SSS sequence having a first cyclic shift and/or an S-PSS sequence having a second cyclic shift.

6. The method according to any one of claims 1 to 5, wherein determining the time domain position of the first resource pool based on the index of the first sidelink synchronization signal comprises:

determining a first parameter based on the index of the first sidelink synchronization signal, wherein the first parameter comprises a time domain distance between a second sidelink synchronization signal that exists in a mapping period and the first resource pool, and duration of the first resource pool, and a type of the second sidelink synchronization signal matches a type of the first terminal device; and

determining the time domain position of the first resource pool based on the first parameter.

7. The method according to claim 6, wherein if the first terminal device is a sensing device, and the first sidelink synchronization signal is a sidelink synchronization signal from another sensing device, the second sidelink synchronization signal is the first sidelink synchronization signal.

8. The method according to claim 6, wherein if the first terminal device is a sensing device, and the first sidelink synchronization signal is a sidelink synchronization signal from a communication device, the second sidelink synchronization signal is determined based on the first sidelink synchronization signal.

9. The method according to any one of claims 1 to 5, wherein determining the time domain position of the first resource pool based on the index of the first sidelink synchronization signal comprises:

determining the time domain position of the first resource pool based on a fourth parameter, wherein the fourth parameter comprises the index of the first sidelink synchronization signal, a time domain distance between a start time domain position and an end time domain position of the first resource pool, and a time domain unit offset between two adjacent sidelink synchronization signals.

10. The method according to any one of claims 1 to 5, wherein determining the time domain position of the first resource pool based on the index of the first sidelink synchronization signal comprises:

determining, based on the index of the first sidelink synchronization signal, a physical index of a time domain unit in which the first sidelink synchronization signal is located;

determining, based on the physical index of the time domain unit in which the first sidelink synchronization signal is located, time domain positions of all time domain units in a mapping period in which the first sidelink synchronization signal exists; and

determining the time domain position of the first resource pool in the mapping period based on the time domain positions of all the time domain units.

11. The method according to claim 10, wherein determining the time domain position of the first resource pool in the mapping period based on the time domain positions of all the time domain units comprises:

determining the time domain position of the first resource pool in the mapping period based on the time domain positions of all the time domain units and a bitmap, wherein the bitmap indicates a time domain unit that is in a logic time domain unit set and that belongs to the first resource pool, and the logic time domain unit set is determined based on the time domain positions of all the time domain units.

12. The method according to any one of claims 1 to 11, wherein the first sidelink synchronization signal further comprises a second sequence, and the second sequence indicates a type of the first sidelink synchronization signal.

13. The method according to claim 12, wherein

the second sequence is a sidelink synchronization signal SLSS sequence; or

the first sidelink synchronization signal comprises an SLSS sequence and the second sequence.

14. The method according to any one of claims 1 to 13, wherein duration of the mapping period is less than or equal to duration of a direct frame number DFN period.

15. The method according to any one of claims 1 to 14, wherein the first resource pool comprises a sensing resource pool or a communication resource pool; and the first terminal device comprises a sensing device or a communication device.

16. The method according to claim 12 or 13, wherein the type of the first sidelink synchronization signal comprises a sensing type or a communication type.

17. A resource pool determining method, applied to a second terminal device or a chip of the second terminal device, wherein the method comprises:
sending a first sidelink synchronization signal in a first time domain unit, wherein the first sidelink synchronization signal comprises a first sequence, the first sequence indicates an index of the first sidelink synchronization signal, and the index of the first sidelink synchronization signal is used to determine a time domain position of a first resource pool.

18. The method according to claim 17, wherein the index of the first sidelink synchronization signal is determined by sorting all sidelink synchronization signals that are of a same type as the first sidelink synchronization signal and that are in a mapping period.

19. The method according to claim 17 or 18, wherein

the first sequence is an S-SSS sequence and/or an S-PSS sequence; or
the first sidelink synchronization signal comprises the first sequence, an S-PSS sequence, and an S-SSS sequence.

20. The method according to claim 19, wherein that the first sequence is the S-SSS sequence and/or the S-PSS sequence comprises:
the first sequence is an S-SSS sequence having a first cyclic shift and/or an S-PSS sequence having a second cyclic shift.

21. The method according to any one of claims 17 to 20, wherein the first sidelink synchronization signal further comprises a second sequence, and the second sequence indicates a type of the first sidelink synchronization signal.

22. The method according to claim 21, wherein

the second sequence is an SLSS sequence; or
the first sidelink synchronization signal comprises an SLSS sequence and the second sequence.

23. The method according to any one of claims 17 to 22, wherein duration of the mapping period is less than or equal to duration of a DFN period.

24. The method according to any one of claims 17 to 23, wherein the first resource pool comprises a sensing resource pool or a communication resource pool; and the second terminal device comprises a sensing device or a communication device.

25. The method according to claim 21 or 22, wherein the type of the first sidelink synchronization signal comprises a sensing type or a communication type.

26. A communication apparatus, wherein the communication apparatus comprises a processing unit and a transceiver unit, and the processing unit is coupled to the transceiver unit, to perform the method according to any one of claims 1 to 16, or perform the method according to any one of claims 17 to 25.

27. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 16, or enable the communication apparatus to perform the method according to any one of claims 17 to 25.

**28.** A computer-readable storage medium, wherein the computer-readable storage medium is configured to store a computer program; and when the computer program is run on a computer, the computer is enabled to perform the method according to any one of claims 1 to 16, or the computer is enabled to perform the method according to any one of claims 17 to 25.

**29.** A computer program product, wherein the computer program product comprises a computer program; and when the computer program is run on a computer, the computer is enabled to perform the method according to any one of claims 1 to 16, or the computer is enabled to perform the method according to any one of claims 17 to 25.

**30.** A chip system, wherein the chip system comprises:
a processor and an interface, wherein the processor is configured to: invoke instructions from the interface, and run the instructions; and when the processor executes the instructions, the method according to any one of claims 1 to 16 is implemented, or the method according to any one of claims 17 to 25 is implemented.

Network device

UE 1

UE 2

FIG. 1

First UE

Second UE

S201: First SL synchronization signal (including a first sequence indicating an index of the first SL synchronization signal)

S202: Determine a time domain position of a first resource pool based on the index of the first SL synchronization signal

FIG. 2

Quantity of SL synchronization time domain units in the mapping period

Mapping period

SL synchronization time domain unit offset

Interval between adjacent SL synchronization time domain units

Time

FIG. 3

Mapping period

Time

Set of sensing synchronization resources

Set of sensing synchronization resources

Set of communication synchronization resources

Set of communication synchronization resources

Sensing synchronization resource

Sensing synchronization resource

Communication synchronization resource

Communication synchronization resource

FIG. 4

Mapping period

Sensing resource pool

Sensing resource pool

Communication resource pool

Communication resource pool

A first parameter includes (1, 9)

The first parameter includes (11, 89)

The first parameter includes (1, 19)

The first parameter includes (21, 40)

Sensing synchronization resource

Communication synchronization resource

FIG. 5A

Mapping period

Time domain distance between a start
time domain position and an end time
domain position of a first resource pool

Time domain distance
between two adjacent S-SSBs

Time

S-SSB 0   S-SSB 1   S-SSB 2   S-SSB 3                          Slot 160
(slot 0)   (slot 10)   (slot 20)   (slot 30)

FIG. 5B

| S-SSB 0 | | ... | | S-SSB 2 | | ... | S-SSB 7 | |

$\Downarrow$

| Slot 0 | Slot 1 | ... | Slot n−1 | Slot n | Slot n+1 | ... | Slot S−1 | Slot S |

Mapping period

FIG. 5C

Communication
apparatus 600

601          605          603

Processor      Processor

CPU 0          CPU 0

CPU 1          CPU 1

Communication
line 602

604

Communication
interface

Memory

FIG. 6

Apparatus 700

701          702          703

Sending unit    Processing
unit          Receiving
unit

FIG. 7

## INTERNATIONAL SEARCH REPORT

| International application No. |
| --- |
| **PCT/CN2024/077417** |

**A.    CLASSIFICATION OF SUBJECT MATTER**

H04W 72/40(2023.01)i

According to International Patent Classification (IPC) or to both national classification and IPC

**B.    FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNABS, CNTXT, ENTXTC, WPABS, VEN, CNKI: 侧行链路辅同步信号, 侧行链路同步信号, 侧行链路主同步信号, 时域, 索引, 位置, 序列, 指示, 资源, S-SSB, S-PSS, S-SSS, time domain, index, position, sequence, indicat+, resource

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2021147765 A1 (VIVO MOBILE COMMUNICATION CO., LTD.) 29 July 2021 (2021-07-29)<br>    description, paragraphs 44-69 | 1-30 |
| A | CN 112653644 A (HUAWEI TECHNOLOGIES CO., LTD.) 13 April 2021 (2021-04-13)<br>    entire document | 1-30 |
| A | CN 113709874 A (BEIJING UNISOC COMMUNICATION TECHNOLOGY CO., LTD.) 26 November 2021 (2021-11-26)<br>    entire document | 1-30 |
| A | CN 115486169 A (GUANGDONG OPPO MOBILE TELECOMMUNICATIONS CORP., LTD.) 16 December 2022 (2022-12-16)<br>    entire document | 1-30 |

☐ Further documents are listed in the continuation of Box C.        ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 March 2024** | **02 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | International application No. |
|---|---|
| | **PCT/CN2024/077417** |

| Patent document<br>cited in search report | | | Publication date<br>(day/month/year) | Patent family member(s) | Publication date<br>(day/month/year) |
|---|---|---|---|---|---|
| WO | 2021147765 | A1 | 29 July 2021 | None | |
| CN | 112653644 | A | 13 April 2021 | None | |
| CN | 113709874 | A | 26 November 2021 | None | |
| CN | 115486169 | A | 16 December 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310171637

- CN 202310386077